# EUROPÄISCHE PATENTSCHRIFT

(11) **EP 2 760 604 B1**
(45) Veröffentlichungstag und Bekanntmachung des Hinweises auf die Patenterteilung: **07.08.2019**
(21) Anmeldenummer: 12770033.4
(22) Anmeldetag: 20.09.2012
(51) Int. Cl.: B21D 39/02, B60J 10/86, F16J 15/02, B60J 5/10

(54) **ABDICHTUNGSEINRICHTUNG FÜR EINE ROHBAUÖFFNUNG EINER KLAPPE, INSBESONDERE EINER HECKKLAPPE EINES KRAFTFAHRZEUGS**
SEALING ARRANGEMENT FOR AN OPENING IN THE STRUCTURE OF A CLOSING ELEMENT FOR A VEHICLE
ARRANGEMENT POUR L'ÉTAINCHÉTÉ D'UNE OUVERTURE DANS LA STRUCTURE D'UN ÉLÉMENT DE FERMETURE POUR UN VÉHICULE

(30) Priorität: 30.09.2011 DE 102011083932
(43) Veröffentlichungstag der Anmeldung: 06.08.2014
(73) Patentinhaber: Bayerische Motoren Werke Aktiengesellschaft, 80809 München (DE)
(72) Erfinder: DOCKWEILER, Achim, 81829 München (DE); ROTTELBERGER, Markus, 84032 Altdorf (DE); LATHWESEN, Harald, 85419 Mauern (DE)
(86) Internationale Anmeldenummer: PCT/EP2012/068545
(87) Internationale Veröffentlichungsnummer: WO 2013/045341

(56) Entgegenhaltungen:
- EP-A2- 1 041 130
- DE-A1- 19 748 786
- DE-A1-102008 032 777

## Beschreibung

Die Erfindung betrifft eine Abdichtungseinrichtung für eine Rohbauöffnung einer Klappe, insbesondere einer Heckklappe eines Kraftfahrzeugs, mit den im Oberbegriff des Patentanspruches 1 angegebenen Merkmalen, sowie ein Verfahren zum Abdichten einer Rohbauöffnung mit einer derartigen Abdichtungseinrichtung.

Bei allen bekannten Kraftfahrzeugen, bei denen die Klappenaußenwand einer Heckklappe wenigstens ein oberes und ein unteres Außenwandteil aufweist, die an zugewandten Umfangswandbereichen im Bereich einer horizontalen, etwa in Fahrzeugquerrichtung angeordneten Trennstelle in das Innere der Heckklappe abgewinkelte und miteinander verbundene Randbereiche aufweisen, sind auf Grund des durch die abgewinkelten Randbereiche gebildeten Falzes zwischen den Außenwandteilen der Klappenaußenwand und einer mit der Klappenaußenwand zu verbindenden Klappeninnenwand jeweils seitlich zwischen der Klappenaußenwand und der Klappeninnenwand Spalte gebildet, die aufwändig und teilweise unzureichend abgedichtet sind. Beispielweise wird nach dem Stand der Technik versucht, die Spalte durch eine PVC-Bördelfalzversiegelung (z.B. nach EP 1041130 A) zu verschließen bzw. abzudichten. Die Bördelfalzversiegelung ist dünnflüssig und kann Spalte allenfalls bis zu einer Größe von ca. 1,5 mm verschließen bzw. abdichten. Größere Spalte können mit der PVC-Bördelfalzversiegelung nicht wasserdicht verschlossen werden, so dass in diesem Fall Feuchtigkeit über die Spalte in das Innere der Heckklappe eindringen und Korrosion an der Heckklappe bewirken kann. Ein anderer Versuch, die Spalte nach dem Stand der Technik zu verschließen oder abzudichten sieht nach einer katalytischen Tauchbadlackierung der Heckklappe vor, dass PVC von einem Werker mühevoll und mit mehr oder weniger Geschick sowie zeit- und kostenaufwändig in die seitlichen Spalte der Heckklappe gefüllt wird. Durch die manuelle Nacharbeit sind die Fertigung der Heckklappe nicht prozesssicher und eine vollautomatische Fertigung der Heckklappe verhindert.

Der Erfindung liegt die Aufgabe zu Grunde, eine Abdichtungseinrichtung für eine Rohbauöffnung einer Klappe, insbesondere einer Heckklappe eines Kraftfahrzeugs, sowie ein Verfahren zum Abdichten einer Rohbauöffnung mit einer derartigen Abdichtungseinrichtung zu schaffen, wobei eine prozesssichere vollautomatische Fertigung einer Klappe ermöglicht ist und dabei auch ein größerer Spalt zwischen der Klappenaußenwand und der Klappeninnenwand im Bereich der abgewinkelten Randbereiche der beiden Außenwandteile der Klappenaußenwand zuverlässig wasserdicht verschlossen werden kann.

Diese Aufgabe ist durch die Merkmale des Patentanspruches 1 bzw. 10 gelöst. Vorteilhafte Ausgestaltungen der Erfindung sind den Unteransprüchen entnehmbar.

Die Abdichtungseinrichtung für eine Rohbauöffnung einer Klappe, insbesondere einer Heckklappe eines Kraftfahrzeugs, weist eine Klappenaußenwand mit wenigstens zwei Außenwandteilen auf, die an zugewandten Umfangswandbereichen jeweils einen nach innen abgewinkelten Randbereich aufweisen, die beispielsweise durch Laserschweißen miteinander verbunden sind. Mit einer Klappeninnenwand, die wenigstens ein Innenwandteil aufweist, das in einem Abstand von den abgewinkelten Randbereichen der Außenwandteile mit wenigstens einem Umfangsbereich der Klappenaußenwandverbunden ist und im Bereich der abgewinkelten Randbereiche der Außenwandteile zusammen mit der Klappenaußenwand einen Spalt bildet. Vor dem Verbinden der Klappenaußenwand mit dem Innenwandteil ist in den Spalt ein Spaltfüllteil eingebracht, das nach dem Verbinden der Klappenaußenwand mit der Klappeninnenwand den Spalt allein oder zusammen mit einem Spaltdichtungsmittel abdichtet. Ein wesentlicher Vorteil der Erfindung ist, dass der betreffende Spalt durch das Spaltfüllteil so verschlossen oder zumindest weitgehend verkleinert wird, dass das Spaltfüllteil allein oder zumindest mit einem Spaltdichtungsmittel, das allenfalls kleinere Spalte abdichten kann, den Spalt wasserdicht abdichten kann. Das Spaltfüllteil kann in einem vollautomatischen Prozess vor dem Verbinden der Klappenaußenwand mit der Klappeninnenwand von einem Greifer ergriffen und beispielsweise durch ein Aufstecken auf einen Bereich der Klappenaußenwand oder der Klappeninnenwand positioniert werden. Eventuell unter Verwendung eines automatisch aufgetragenen Spaltdichtungsmittels, beispielsweise einer PVC-Bördelfalzversiegelung, ist nach dem Verbinden der Klappenaußenwand mit der Klappeninnenwand der betreffende Spalt wasserdicht verschlossen und abgedichtet.

Ein Ausführungsbeispiel der Erfindung wird anhand einer Zeichnung näher erläutert. Es zeigen
- Fig. 1: eine perspektivische Ansicht auf einen seitlichen Spalt einer Heckklappe eines Kraftfahrzeugs, in den ein Spaltfüllteil eingebracht ist und
- Fig. 2: eine perspektivische Ansicht von dem Spaltfüllteil.

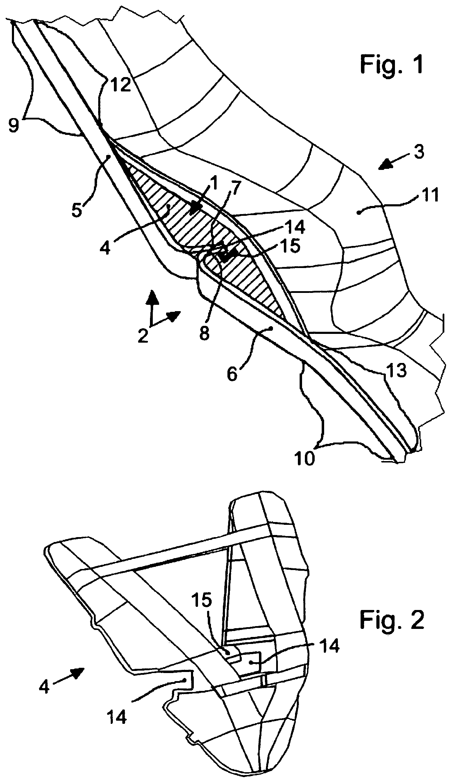

In Fig. 1 ist ein seitlicher Spalt 1 zwischen einer oberen Klappenaußenwand 2 und einer unteren Klappeninnenwand 3 einer Heckklappe eines Kraftfahrzeugs in einer perspektivischen Ansicht vergrößert und vereinfacht dargestellt, der beim Rohbau der Heckklappe zwangsweise gebildet ist. Der Spalt 1 ist von einem in Fig. 1 schraffiert dargestellten Spaltfüllteil 4 einer Abdichtungseinrichtung wasserdicht verschlossen.

Die Klappenaußenwand 2 weist zwei Außenwandteile 5, 6 auf, die an zugewandten Umfangswandbereichen jeweils einen nach innen in das Innere der Heckklappe abgewinkelten Randbereich 7, 8 aufweisen, die beispielsweise durch Laserschweißen miteinander verbunden sind und eine im Wesentlichen etwa horizontale, in Querrichtung des Kraftfahrzeugs verlaufende Trennfuge bilden.

In einem Abstand von den abgewinkelten Randbereichen 7, 8 der Außenwandteile 5, 6 ist die Klappenaußenwand 2 in einem jeweils zugeordneten Umfangsbereich 9, 10 der Außenwandteile 5, 6 mit einem Innenwandteil 11 der Klappeninnenwand 3 verbunden, wobei das Innenwandteil 11 bei dem Ausführungsbeispiel an einem an den jeweiligen Umfangswandbereich 9, 10 der Klappenaußenwand 2 angrenzenden Umfangsbereich 12, 13 zumindest bereichsweise gleichsinnig wie die Außenwandteile 5, 6 abgewinkelt ausgebildet ist.

In Fig. 1 ist erkennbar, dass auf Grund der im Bereich der Trennfuge an zugewandten Umfangswandbereichen 9, 10 abgewinkelten Randbereiche der Außenwandteile 5, 6 die Außenwandteile 5, 6 seitlich nicht so mit dem Innenwandteil 11 verbunden sein können, dass kein seitlicher Spalt 1 zwischen den Außenwandteilen 5, 6 und dem Innenwandteil 11 gebildet wäre.

Um diesen beispielsweise maximal 8 mm breiten Spalt 1 wasserdicht zu verschließen, ist das in Fig. 1 schraffiert vereinfacht und in Fig. 2 in einer perspektivischen Ansicht detaillierter dargestellte Spaltfüllteil 4 vorgesehen.

Das Spaltfüllteil 1 ist vor dem Verbinden der Klappenaußenwand 2 mit der Klappeninnenwand 3 beispielsweise von einem Greifer automatisch in eine Verschlusslage gebracht, in der das Spaltfüllteil 4 nach dem Verbinden der Klappenaußenwand 2 mit der Klappeninnenwand 3 den Spalt 1 allein oder zusammen mit einem nicht dargestellten Spaltdichtungsmittel vollständig wasserdicht verschließt und abdichtet.

Vor dem Verbinden der Klappenaußenwand 2 mit dem Innenwandteil 11 der Klappeninnenwand 3 ist das zum Verschließen des Spalts 1 vorgesehene Spaltfüllteil 4 in eine zum Verschließen des Spalts 1 geeignete Verschlusslage gebracht und mit der Klappenaußenwand 2 bzw. wenigstens einem Außenwandteil 5, 6 oder mit dem Innenwandteil 11 der Klappeninnenwand 3 verbunden. Dabei kann das Spaltfüllteil 4 vor dem Verbinden der Klappenaußenwand 2 mit dem Innenwandteil 11 beispielsweise an der Klappenaußenwand 2 oder an dem Innenwandteil 11 verclipst oder festgeklemmt sein.

Bei dem Ausführungsbeispiel ist hierfür vorgesehen, dass das in die Verschlusslage gebrachte Spaltfüllteil 4 eine zentrale Befestigungsnut 14 aufweist, die vor dem Verbinden der Klappenaußenwand 2 mit dem Innenwandteil 11 auf die nach innen abgewinkelten Randbereiche 7, 8 der beiden Außenwandteile 5, 6 aufgesteckt und dadurch in die Verschlusslage gebracht ist, in der eine von dem Spaltfüllteil 4 abstehende Federzunge 15 mit einem abgewinkelten Randbereich 8 eines zugewandten Außenwandteiles 6 zusammen wirkend einen Seitenbereich der Befestigungsnut 14 des Spaltfüllteiles 4 gegen einen abgewinkelten Randbereich 7 des anderen Außenwandteiles 5 belastet und dadurch das Spaltfüllteil 4 an den abgewinkelten Randbereichen 7, 8 der Außenwandteile 5, 6 fest klemmt bzw. ausreichend fest hält.

Vor, bei oder nach dem Verbinden der Klappenaußenwand 2 mit der Klappeninnenwand 3 kann das Spaltfüllteil 4 zumindest kurzzeitig derart fließfähig erwärmt sein, dass sich das Spaltfüllteil 4 zumindest beim Verbinden der Klappenaußenwand 2 mit der Klappeninnenwand 3 plastisch verformt und dabei an den Spalt anpasst. Nach dem Verbinden der Klappenaußenwand 2 mit der Klappeninnenwand 3, verschließt das Spaltfüllteil 4 den Spalt 1 zumindest weitgehend und dichtet den Spalt 1 allein oder zusammen mit einem nicht dargestellten Spaltdichtungsmittel wasserdicht ab.

Das Spaltfüllteil 4 kann auch beispielsweise ein Spritzgussteil aus einem 2-Komponenten-Kunststoff sein, der an seinem dem Umfangsbereich des Spalts 1 zugewandten Bereich eine gegenüber seinem Körper weichere Materialkomponente aufweist, die nach einem Verbinden der Klappenaußenwand 2 mit der Klappeninnenwand 3 allein oder in Verbindung mit einem zusätzlichen Spaltdichtungsmittel wasserdicht an einem Umfangbereich des Spalts 1 anliegt.

Bei Verwendung eines zum Spaltfüllteil 4 zusätzlichen Spaltdichtungsmittels kann das Spaltdichtungsmittel beispielsweise eine PVC-Bördelfalzversiegelung sein.

In Fig. 2 ist erkennbar, dass das Spaltfüllteil 4 bei dem Ausführungsbeispiel seitensymmetrisch ausgebildet ist, wobei das Spaltfüllteil 4 mit einem linken Seitenbereich den in Fig.1 dargestellten linken Spalt und mit dem in Fig. 2 dargestellten rechten Seitenbereich den in Fig. 1 nicht erkennbaren rechten Spalt der Heckklappe in gleicher Weise wie zum linken Spalt 1 angegeben, zumindest weitgehend füllt bzw. allein oder zusammen mit einem Spaltdichtungsmittel vollständig wasserdicht abdichtet.

Die Erfindung kann selbstverständlich von dem einzigen Ausführungsbeispiel abweichend ausgeführt werden. Die beiden Außenwandteile der Klappenaußenwand können an den zugewandten Umfangswandbereichen, an denen die Außenwandteile jeweils einen nach innen abgewinkelten Randbereich aufweisen, in beliebiger Weise, beispielsweise durch Laserschweißen miteinander verbunden sein. Die Klappeninnenwand kann auch mehr als ein Innenwandteil aufweisen. Das Spaltfüllteil kann in beliebiger Weise in die Verschlusslage gebracht und dort vor dem Verbinden der Klappenaußenwand mit der Klappeninnenwand festgehalten sein. Beispielsweise ist das Spaltfüllteil in seiner Verschlusslage vor dem Verbinden der Klappenaußenwand mit der Klappeninnenwand mit der Klappenaußenwand oder mit der Klappeninnenwand fest oder lösbar verbunden. Das Spaltfüllteil kann in seiner Verschlusslage an dem Innenwandteil der Klappeninnenwand oder an wenigstens einem Außenwandteil der Klappenaußenwand verclipst oder festgeklemmt sein. Das Spaltfüllteil kann wenigstens eine Befestigungsnut aufweisen, die in der Verschlusslage des Spaltfüllteiles auf wenigstens einen nach innen abgewinkelten Randbereich eines Außenwandteiles aufgesteckt ist. Beispielsweise in diesem Fall kann eine von dem Spaltfüllteil abstehende Federzunge mit einem abgewinkelten Randbereich eines Außenwandteiles zusammen wirkend einen Seitenbereich der Befestigungsnut des Spaltfüllteiles gegen einen abgewinkelten Randbereich eines Außenwandteiles belasten und dadurch das Spaltfüllteil an den abgewinkelten Randbereichen der Außenwandteile fest klemmen bzw. ausreichend fest halten. Zusätzlich zu dem Spaltfüllteil kann ein beliebiges Spaltdichtungsmittel verwendet sein, das nach dem Verbinden der Klappenaußenwand mit der Klappeninnenwand zusammen mit dem Spaltfüllteil den betreffenden Spalt vorzugsweise wasserdicht abdichtet. Lediglich beispielsweise ist das Spaltdichtungsmittel eine PVC-Bördelfalzversiegelung. Die Klappe kann eine beliebige Klappe, beispielsweise eine Heckklappe eines Kraftfahrzeugs sein. Es ist zwar vorteilhaft, jedoch nicht zwingend erforderlich, dass das Spaltfüllteil seitensymmetrisch ausgebildet ist und mit einem linken Seitenbereich einen linken Spalt und mit einem rechten Seitenbereich einen rechten Spalt der Klappe zumindest weitgehend füllt und allein oder zusammen mit einem Spaltdichtungsmittel verschließt und wasserdicht abdichtet. Ebenso können bei mehreren Spalten jedem Spalt ein separates Spaltfüllteil zugeordnet sein. Dies erhöht jedoch eine Lagerhaltung und erfordert Maßnahmen, die sicher stellen, dass für jeden Spalt das richtige Spaltfüllteil bereit gestellt ist. Bei zwei abzudichtenden Spalten, die eine vergleichbare, lediglich seitenverkehrte Form aufweisen, ist vorzugsweise ein gemeinsames, seitensymmetrisch ausgebildetes Spaltfüllteil verwendet, das in einem Bereich an einen Spalt und in einem anderen Bereich an den anderen Spalt angepasst ist. Ein derartiges Spaltfüllteil ist bei dem Ausführungsbeispiel verwendet und weist eine einzige zentrale, gemeinsame Befestigungsnut auf, die jeweils an einer zugeordneten, beispielsweise linken und rechten Stelle auf gemeinsam abgewinkelte Randbereiche der beiden Außenwandteile aufsteckbar ist. Beispielsweise eine einzige, der Befestigungsnut zugeordnete elastische Federzunge kann das Spaltfüllteil an den gemeinsam abgewinkelten Randbereichen der Außenwandteile festklemmen. Die Abdichtungseinrichtung für eine Rohbauöffnung einer Klappe ermöglicht eine prozesssichere, vollautomatische Fertigung der Klappe sowie ein vollautomatisches, wasserdichtes Verschließen des Spaltes der Klappe.

## Patentansprüche

1. Abdichtungseinrichtung für eine Rohbauöffnung einer Klappe, insbesondere einer Heckklappe eines Kraftfahrzeugs, wobei die Abdichtungseinrichtung eine Klappenaußenwand (2) mit wenigstens zwei Außenwandteilen (5, 6) aufweist, die an zugewandten Umfangswandbereichen jeweils einen nach innen abgewinkelten Randbereich (7, 8) aufweisen, die miteinander verbunden sind, mit einer Klappeninnenwand (3), die wenigstens ein Innenwandteil (11) aufweist, das in einem Abstand von den abgewinkelten Randbereichen (7, 8) der Außenwandteile (5, 6) mit wenigstens einem Umfangsbereich der Klappenaußenwand (2) verbunden ist und im Bereich der abgewinkelten Randbereiche (7, 8) der Außenwandteile (5, 6) zusammen mit der Klappenaußenwand (2) einen Spalt (1) bildet, **dadurch gekennzeichnet, dass** die Abdichtungseinrichtung ein Spaltfüllteil (4) aufweist, das in eine zum Verschließen des Spalts (1) geeigneten Verschlußlage gebracht ist, in welcher der Spalt alleine durch das Spaltfüllteil (4) oder durch das Spaltfüllteil (4) zusammen mit einem Spaltdichtungsmittel abgedichtet ist.

2. Abdichtungseinrichtung nach Patentanspruch 1, **dadurch gekennzeichnet, dass** das Spaltfüllteil (4) in seiner Verschlusslage an wenigstens einem Außenwandteil (5, 6) der Klappenaußenwand (2)oder an dem Innenwandteil der Klappeninnenwand befestigt ist.

3. Abdichtungseinrichtung nach Patentanspruch 1 oder 2, **dadurch gekennzeichnet, dass** das Spaltfüllteil (4) in seiner Verschlusslage an dem Innenwandteil der Klappeninnenwand oder an wenigstens einem Außenwandteil (5, 6) der Klappenaußenwand (2) verclipst oder festgeklemmt ist.

4. Abdichtungseinrichtung nach einem der Patentansprüche 1 bis 3, **dadurch gekennzeichnet, dass** das Spaltfüllteil (4) eine Befestigungsnut (14) aufweist, die in der Verschlusslage des Spaltfüllteiles (4) auf die nach innen abgewinkelten Randbereiche (7, 8) der beiden Außenwandteile (5, 6) aufgesteckt ist, oder das Spaltfüllteil (4) die Befestigungsnut (14) und zusätzlich eine von dem Spaltfüllteil (4) abstehende Federzunge (15) aufweist, wobei die Federzunge (15) mit einem abgewinkelten Randbereich (8) eines Außenwandteiles (6) zusammen wirkend einen Seitenbereich der Befestigungsnut (14) des Spaltfüllteils (4) gegen einen abgewinkelten Randbereich (7) eines Außenwandteiles (5) belastet und dadurch das Spaltfüllteil (4) an den abgewinkelten Randbereichen (7, 8) der Außenwandteile (5, 6) fest klemmt bzw. ausreichend fest hält.

5. Abdichtungseinrichtung nach einem der Patentansprüche 1 bis 4, **dadurch gekennzeichnet, dass** das Spaltfüllteil (4) ein Spritzgussteil aus einem 2-Komponenten-Kunststoff ist, der an seinem dem Umfangsbereich des Spalts (1) zugewandten Bereich eine gegenüber seinem Körper weichere Materialkomponente aufweist, die sich an den Umfangsbereich des Spalts (1) anpassen kann.

6. Abdichtungseinrichtung nach einem der Patentansprüche 1 bis 5, **dadurch gekennzeichnet, dass** das Spaltdichtungsmittel eine PVC-Bördelfalzversiegelung ist.

7. Abdichtungseinrichtung nach einem der Patentansprüche 1 bis 6, **dadurch gekennzeichnet, dass** die Klappe eine Heckklappe eines Kraftfahrzeugs ist.

8. Abdichtungseinrichtung nach einem der Patentansprüche 1 bis 7, **dadurch gekennzeichnet, dass** die Klappe ein oberes (5) und ein unteres Außenwandteil (6) aufweist, die an einer etwa horizontalen, in Querrichtung verlaufenden Trennfuge, über die Randbereiche (7, 8) derart verbunden sind, dass über die in Querrichtung linken und rechten Bereichen der Trennfuge der Spalt (1) gebildet ist.

9. Abdichtungseinrichtung nach Patentanspruch 8, **dadurch gekennzeichnet, dass** das Spaltfüllteil (4) seitensymmetrisch ausgebildet ist und mit einem linken Seitenbereich einen linken Bereich des Spalts (1) und mit einem rechten Seitenbereich einen rechten Bereich des Spalts der Klappe zumindest weitgehend füllt und allein oder zusammen mit einem Spaltdichtungsmittel verschließt und wasserdicht abdichtet.

10. Verfahren zum Abdichten einer Rohbauöffnung einer Klappe mit einer Abdichtungseinrichtung nach einem der Patentansprüche 1 bis 9, wobei das Spaltfüllteil (4) vor einem Verbinden der Klappenaußenwand (2) mit der Klappeninnenwand (3) in die Verschlußlage gebracht wird.

11. Verfahren nach Patentanspruch 10, wobei das Spaltfüllteil (4) in seiner Verschlußlage vor dem Verbinden der Klappenaußenwand (2) mit der Klappeninnenwand (3) an wenigstens einem Außenwandteil (5, 6) der Klappenaußenwand (2) oder an dem Innenwandteil der Klappeninnenwand befestigt wird.

12. Verfahren nach Patentanspruch 10 oder 11, wobei vor, bei oder nach dem Verbinden der Klappenaußenwand (2) mit der Klappeninnenwand (3) das Spaltfüllteil (4) zumindest kurzzeitig derart fließfähig erwärmt wird, dass sich das Spaltfüllteil (4) beim Verbinden der Klappenaußenwand (2) mit der Klappeninnenwand (3) verformen und nach dem Verbinden der Klappenaußenwand (2) mit der Klappeninnenwand (3) den Spalt (1) allein oder zusammen mit einem Spaltdichtungsmittel abdichten kann.

## Claims

1. A sealing device for an opening in the shell of a flap, in particular a tailgate of a motor vehicle, which has a flap outer wall (2) with at least two outer wall parts (5, 6), which respectively have on facing circumferential wall regions an inwardly angled-away peripheral region (7, 8), which peripheral regions are connected to one another, with a flap inner wall (3), which has at least one inner wall part (11), which is connected at a distance from the angled-away peripheral regions (7, 8) of the outer wall parts (5, 6) to at least one circumferential region of the flap outer wall (2) and, in the region of the angled-away peripheral regions (7, 8) of the outer wall parts (5, 6), forms together with the flap outer wall (2) a gap (1), **characterised in that** the sealing device has a gap filling part (4) which is brought into a closing position suitable for closing the gap (1), in which the gap is sealed on its own by the gap filling part (4) or by the gap filling part (4) together with a gap sealing means.

2. A sealing device according to Claim 1, **characterised in that**, in its closing position, the gap filling part (4) is attached to at least one outer wall part (5, 6) of the flap outer wall (2) or to the inner wall part of the flap inner wall.

3. A sealing device according to Claim 1 or 2, **characterised in that**, in its closing position, the gap filling part (4) is clipped or clamped to the inner wall part of the flap inner wall or to at least one outer wall part (5, 6) of the flap outer wall (2).

4. A sealing device according to one of Claims 1 to 3, **characterised in that** the gap filling part (4) has a mounting groove (14) which is pushed onto the inwardly angled-away peripheral regions (7, 8) of the two outer wall parts (5, 6) when the gap filling part (4) is in the closing position, or the gap filling part (4) has the mounting groove (14) as well as a spring tongue (15) protruding out of the gap filling part (4), the spring tongue (15) cooperating with an angled-away peripheral region (8) of an outer wall part (6) in such a way that a side region of the mounting groove (14) of the gap filling part (4) is loaded against an angled-away peripheral region (7) of an outer wall part (5), causing the gap filling part (4) to clamp or sufficiently affix to the angled-away peripheral regions (7, 8) of the outer wall parts (5, 6).

5. A sealing device according to one of Claims 1 to 4, **characterised in that** the gap filling part (4) is an injection-moulded part made of a two-part synthetic material, which on the region angled towards the circumferential region of the gap (1) has a softer material component than that of its body, which material component can adapt to the circumferential region of the gap (1).

6. A sealing device according to one of Claims 1 to 5, **characterised in that** the gap sealing means is a PVC edge flange sealant.

7. A sealing device according to one of Claims 1 to 6, **characterised in that** the flap is a tailgate of a motor vehicle.

8. A sealing device according to one of Claims 1 to 7, **characterised in that** the flap has an upper (5) and a lower outer wall part (6) which are joined together via an approximately horizontal parting line extending in a transverse direction across the peripheral regions (7, 8) in such a way that the gap (1) is formed via the left and right regions in the transverse direction of the parting line.

9. A sealing device according to Claim 8, **characterised in that** the gap filling part (4) is symmetrical and fills at least to a substantial extent a left region of the gap (1) of the flap with a left side region and a right region of the gap of the flap with a right side region and closes and seals in a waterproof manner on its own or together with a gap sealing means.

10. A method for sealing an opening in the shell of a flap with a sealing device according to one of Claims 1 to 9, the gap filling part (4) being brought into the closing position before the flap outer wall (2) is connected to the flap inner wall (3).

11. A method according to Claim 10, the gap filling part (4) in its closing position being attached to at least one outer wall part (5, 6) of the flap outer wall (2) or to the inner wall part of the flap inner wall before the flap outer wall (2) is connected to the flap inner wall (3).

12. A method according to Claim 10 or 11, in which before, when or after the flap outer wall (2) connects with the flap inner wall (3), the gap filling part (4) is warmed up at least momentarily so that it is flowable and in such a way that the gap sealing part (4) can deform when the flap outer wall (2) connects with the flap inner wall (3) and can seal the gap (1) on its own or together with a gap sealing means after the flap outer wall (2) has connected with the flap inner wall (3).

## Revendications

1. Installation d'étanchéité pour une ouverture dans la structure d'un volet, notamment du capot arrière d'un véhicule automobile, cette installation d'étanchéité comportant une paroi extérieure de volet (2) avec au moins deux parties de paroi extérieure (5, 6) ayant une zone de bord (7, 8) recourbée vers l'intérieur dans les zones de paroi extérieures tournées l'une vers l'autre, ces zones de bord étant reliées l'une à l'autre, une paroi intérieure de volet (3) qui a au moins une partie de paroi intérieure (11) reliée à une certaine distance des zones de bord (7, 8) recourbées des parties de parois extérieures (5, 6) avec au moins une zone périphérique de la paroi extérieure de volet (2) et qui forme un intervalle (1) avec la paroi extérieure de volet (2) dans la région des zones de bord recourbées (7, 8) des parties de paroi extérieure (5, 6),
**caractérisée en ce que**
l'installation d'étanchéité comporte une pièce de remplissage d'intervalle (4) mise dans une position d'obturation appropriée pour fermer l'intervalle (1), dans laquelle l'intervalle est fermé de manière étanche par la pièce de remplissage d'intervalle (4) ou par la pièce de remplissage d'intervalle (4) avec un agent d'étanchéité d'intervalle.

2. Installation d'étanchéité selon la revendication 1,
**caractérisée en ce que**
dans sa position d'obturation, la pièce de remplissage d'intervalle (4) est fixée à au moins une partie (5, 6) de la paroi extérieure de volet (2) ou à la partie de la paroi intérieure de volet.

3. Installation d'étanchéité selon la revendication 1 ou 2,
**caractérisée en ce que**
dans sa position d'obturation, la pièce de remplissage d'intervalle (4) est clipsée ou serrée solidairement contre la partie de la paroi intérieure de volet ou contre au moins une partie (5, 6) de la paroi extérieure de volet (2).

4. Installation d'étanchéité selon l'une des revendications 1 à 3,
**caractérisée en ce que**
la pièce de remplissage d'intervalle (4) comporte une rainure de fixation (14) qui, en position d'obturation de la pièce de remplissage d'intervalle (4), est engagée sur les parties de bord (7, 8) recourbées vers l'intérieur des deux parties de parois extérieures (5, 6) ou la pièce de remplissage d'intervalle (4) comporte la rainure de fixation (14) et en plus une languette élastique (15) en relief de la pièce de remplissage d'intervalle (4), cette languette élastique (15) coopérant avec une partie de bord (8) recourbée d'une partie de paroi extérieure (6) pour appliquer la zone latérale de la rainure de fixation (14) de la pièce de remplissage d'intervalle (4) contre la partie de bord recourbée (7) de la partie de paroi extérieure (5) et **en ce que** la pièce de remplissage d'intervalle (4) est serrée ou est maintenue d'une manière suffisamment solidaire sur les zones de bord recourbées (7, 8) des parties de paroi extérieure (5, 6).

5. Installation d'étanchéité selon l'une des revendications 1 à 4,
**caractérisée en ce que**
la pièce de remplissage d'intervalle (4) est une pièce injectée en une matière plastique à deux composants et dont la zone tournée vers la zone périphérique de l'intervalle (1) a un composant plus mou que celui de son corps et qui s'adapte à la zone périphérique de l'intervalle (1).

6. Installation d'étanchéité selon l'une des revendications 1 à 5,
**caractérisée en ce que**
l'agent d'étanchéité de l'intervalle est un agent d'étanchéité PVC de la feuillure moletée.

7. Installation d'étanchéité selon l'une des revendications 1 à 6,
**caractérisée en ce que**
le volet est le capot arrière d'un véhicule.

8. Installation d'étanchéité selon l'une des revendications 1 à 7,
**caractérisée en ce que**
le volet a une partie supérieure (5) et une partie inférieure (6) de paroi extérieure qui sont reliées sensiblement par un joint horizontal dans la direction transversale par les zones de bord (7, 8) de façon que les zones du joint à gauche et à droite de la direction transversale forment l'intervalle (1).

9. Installation d'étanchéité selon la revendication 8,
**caractérisée en ce que**
la pièce de remplissage d'intervalle (4) est symétrique par ses côtés et remplit par sa zone latérale gauche, la zone gauche de l'intervalle (1) et par sa zone latérale droite, la zone droite de l'intervalle du volet, au moins pratiquement et ferme et réalise l'étanchéité, seule ou avec un agent d'étanchéité d'intervalle.

10. Procédé pour rendre étanche une ouverture de structure d'un volet avec une installation d'étanchéité selon l'une des revendications 1 à 9, selon on met la pièce de remplissage d'intervalle (4) en position d'obturation avant de relier la paroi extérieure de volet (2) à sa paroi intérieure (3).

11. Procédé selon la revendication 10,
selon lequel on fixe la pièce de remplissage d'intervalle (4) dans sa position d'obturation avant de relier la paroi extérieure de volet (2) à la paroi intérieure de volet (3) sur au moins une partie (5, 6) de la paroi extérieure de volet (2) ou sur la partie de paroi intérieure de la paroi intérieure de volet.

12. Procédé selon la revendication 10 ou 11,
selon lequel, avant, pendant ou après de relier la paroi extérieure de volet (2) à la paroi intérieure de volet (3), on réchauffe la pièce de remplissage d'intervalle (4) au moins brièvement pour la rendre fluide de façon que lorsqu'on relie la paroi extérieure de volet (2) à la paroi intérieure de volet (3), la pièce de remplissage d'intervalle (4) se déforme et qu'après avoir relié la paroi extérieure de volet (2) à sa paroi intérieure (3), elle réalise l'étanchéité de l'intervalle (1), seule ou avec un agent d'étanchéité d'intervalle.
